# EUROPEAN PATENT APPLICATION

(11) **EP 2 757 477 A1**
(43) Date of publication of application: **23.07.2014**
(21) Application number: 13197387.7
(22) Date of filing: 16.12.2013
(51) Int. Cl.: G06F 11/07, G06F 11/14, G06F 11/16

(54) **Information processing apparatus and stored information analyzing method**

(30) Priority: 27.12.2012 JP 2012286246
(71) Applicant: FUJITSU LIMITED, Kawasaki-shi, Kanagawa 211-8588 (JP)
(72) Inventor: Niwa, Hideyuki, Kanagawa, 211-8588 (JP); Ueda, Yasuo, Kanagawa, 211-8588 (JP)
(74) Representative: HOFFMANN EITLE

(57) **Abstract**

An information processing apparatus (1) includes: a dividing unit (3, 13) dividing a storage region in accordance with storage region management information, the storage region management information and type information; a setting unit (4, 13) selecting a first division region from division regions indicative of the divided storage region and that puts the first division region in a stand-by state; a detecting unit (5, 31, 17) detecting an abnormality in information processing when the information processing is performed using a second division region of the division regions; a controlling unit (6, 13) putting the second division region in the stand-by state and that causes the first division region, which has been in the stand-by state, to recover; and an analyzing unit (7, 12) adding the second division region that is in the stand-by state to a physical address space, and analyzing information stored in the second division region.

## Description

### FIELD

The embodiments described herein are related to a technology for analyzing stored information.

### BACKGROUND

When a system abnormality occurs, an investigation is carried out or a content of a memory is output to a file (a memory dump is collected). This delays restarting of the system operation. For maintenance operations such as a crash investigation and restoration work for a system abnormality, a memory dump is collected and the cause is investigated. However, failure to clarify the cause disables an optimum restoration work. Moreover, it takes a long time to collect a memory dump, thereby delaying the restarting of the system operation.

When an abnormality occurs in a server system, a memory dump is collected and investigated to clarify the cause. An example of a procedure to investigate the memory dump is as follows. (1) Reserve a work region within a memory in order to operate a dump command. (2) Repeatedly perform a process of reading information from the memory and of writing the read information to another device so as to collect data held in the memory. After collecting the data, restore the system by restarting the system. (3) Expand the collected memory dump in another system. (4) Execute a maintenance command such as a crash for the memory dump that was expanded in the other system so as to investigate the cause.

Examples of a method for collecting a memory dump when a system fault occurs include, for example, the following technologies.

In a first technology, a memory is duplexed again without restarting a system after the end of a dump. First, a write control unit refers to a dump flag to confirm the necessity of a dump and controls an initialization control unit so as to initialize only a master memory. While the dump flag is "1", the write control unit and a read control unit perform control so as to allow only the master memory to be accessed. After the end of initialization of the master memory, a status of initialization completion is returned, and an OS is started. A process is performed of writing a memory dump to a slave memory. A dump write control unit performs a process of reading data from the slave memory and writing the data to a disk. After the end of the write, the dump status control unit initializes the slave memory by the write control unit. The master memory and the slave memory are made to have a mirrored configuration by the mirroring control unit in response to the end of initialization.

In a second technology, information stored at the time of the abnormal end is acquired without making the restarting of the computer system wait. If a computer system ends abnormally, duplexed main storage devices are separated from each other and are made to function as individual main storage devices. Next, the computer system is restarted by using only one separated main storage device. In addition, the information stored at the time of the abnormal end is held in the other main storage device. Restarting the computer system causes a processor to perform a plurality of process transactions concurrently while causing all pieces of data saved in the other main storage device to migrate to, for example, a magnetic tape apparatus via an I/O processor.
Patent document 1: Japanese Laid-open Patent Publication No. 2007-87263
Patent document 2: Japanese Laid-open Patent Publication No. 7-234808

### SUMMARY

An aspect of the present invention provides an information processing apparatus that is capable of easily analyzing memory information that has been protected in response to an occurrence of an abnormality.

An information processing apparatus in accordance with the embodiment includes a storage unit, a dividing unit, a setting unit, a detecting unit, a controlling unit, and an analyzing unit. The storage unit includes a storage region in which information is stored. The dividing unit divides the storage region of the storage unit in accordance with storage region management information that includes identification information that identifies the storage region of the storage unit and type information that indicates a type of the storage region. The setting unit selects a first division region from division regions indicative of the divided storage region and puts the first division region in a stand-by state. When information processing is performed using a second division region of the division regions that is different from the first division region, the detecting unit detects an abnormality in information processing. When an abnormality is detected, the controlling unit puts the second division region in a stand-by state and causes the first division region, which has been in the stand-by state, to recover. When information processing subsequent to reactivation is performed using the first division region, which has recovered, the analyzing unit adds the second division region that is in the stand-by state to a physical address space and analyzes the information stored in the second division region.

### DESCRIPTION OF EMBODIMENTS

FIG. 1 illustrates an example of an information processing apparatus in accordance with the embodiment.
FIG. 2 illustrates a hardware block diagram of an information processing apparatus in accordance with the embodiment.
FIG. 3 illustrates an example of a multiplexing memory-mirroring system in accordance with the embodiment.
FIG. 4A illustrates states of a mirror memory and a stand-by memory before replacement in accordance with the embodiment (example 1).
FIG. 4B illustrates a state of a management table for the situation of FIG. 4A.
FIG. 5A illustrates states of a mirror memory and a stand-by memory in accordance with the embodiment (example 1) indicated when a panic watchdog timer (WDT) abnormality occurs.
FIG. 5B illustrates a state of a management table for the situation of FIG. 5A.
FIG. 6A illustrates states of a mirror memory and a stand-by memory in accordance with the embodiment (example 1) indicated when a panic watchdog timer (WDT) abnormality occurs during a memory error.
FIG. 6B illustrates a state of a management table for the situation of FIG. 6A.
FIG. 7 illustrates a transition of a state of a memory region for an event that occurs in the embodiment (example 1).
FIG. 8 illustrates a flow of a process of setting up memory mirroring and a stand-by memory in a boot process in the embodiment (example 1).
FIG. 9 illustrates a flow of a process of switching a stand-by memory when a panic WDT abnormality occurs in the embodiment (example 1).
FIG. 10 illustrates a flow of a process of switching a stand-by memory when the system hangs up in the embodiment (example 1).
FIG. 11 illustrates a flow of a process of separating an error memory when a memory error occurs in the embodiment (example 1).
FIG. 12 illustrates a flow of a maintenance/restoration process in the embodiment (example 1).
FIG. 13 illustrates a process of separating a memory region from a physical address space in the embodiment (example 1).
FIG. 14 illustrates mapping a stand-by memory to a virtual address space in the embodiment (example 1).
FIG. 15A illustrates a state of a memory indicated when a two-side memory mirroring system is normally operated in the embodiment (example 2).
FIG. 15B illustrates a state of a management table for the situation of FIG. 15A.
FIG. 16A illustrates a state of a memory indicated at the time of a panic, WDT, or resetting of a two-side mirroring system in the embodiment (example 2).
FIG. 16B illustrates a state of a management table for the situation of FIG. 16A.
FIG. 17A illustrates a state of a memory indicated when a fault in a two-side mirroring system is investigated in the embodiment (example 2).
FIG. 17B illustrates a state of a management table for the situation of FIG. 17A.

### DESCRIPTION OF EMBODIMENTS

Memories mounted on an information processing apparatus have tended to be large-sized, thereby extending the time required to collect a memory dump. This prolongs the time required to restart the information processing apparatus. In addition, investigations are often started after collected dump data is input to another information processing apparatus, thereby taking a longer time before the investigations are launched. Moreover, a work region is reserved in a memory in order to operate a dump command, and consequently, data within the memory to be dumped is partially destroyed.

In the first technology, which adopts a duplexed mirror memory configuration, mirroring of the system is recovered after a memory dump is collected. However, a memory error that occurs before the mirroring is recovered may possibly lead to failure to collect a memory dump.

In the second technology, restarting a computer system causes all pieces of data saved in a main storage device that holds information stored when an abnormal end occurs to migrate to, for example, a magnetic tape device, thereby requiring a time before the data is analyzed.

Accordingly, an aspect of the present invention provides an information processing apparatus that is capable of easily analyzing memory information that has been protected in response to an occurrence of an abnormality.

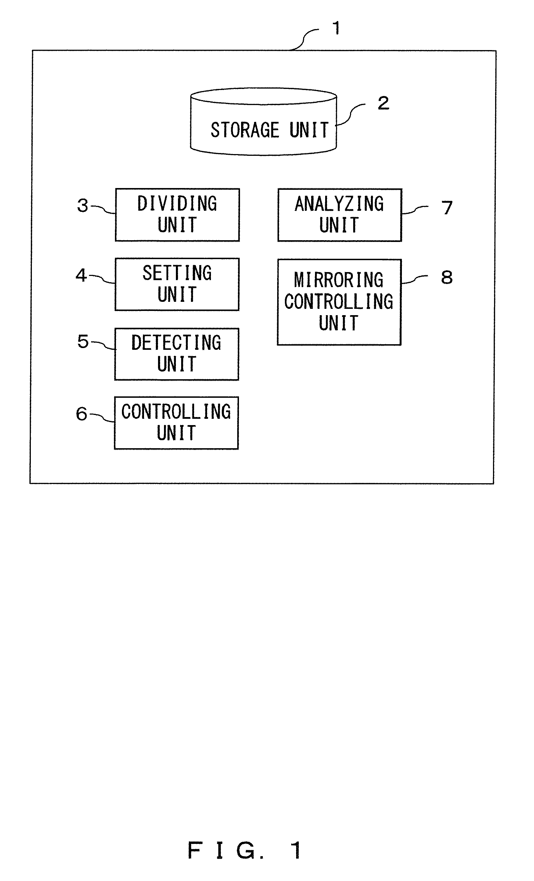

FIG. 1 illustrates an example of an information processing apparatus in accordance with the embodiment. An information processing apparatus 1 includes a storage unit 2, a dividing unit 3, a setting unit 4, a detecting unit 5, a controlling unit 6, and an analyzing unit 7.

The storage unit 2 includes a storage region in which information is stored. An example of the storage unit 2 is a memory 19.

The dividing unit 3 divides the storage region in accordance with storage region management information. The storage region management information includes identification information to identify the storage region of the storage unit and type information to indicate a type of the storage region. An example of the storage region management information is a management table 14. An example of the dividing unit 3 is firmware 13.

The setting unit 4 selects a first division region from division regions indicative of the divided storage region and puts the first division region in a stand-by state. An example of the setting unit 4 is the firmware 13.

When information processing is performed using a second division region from among the division regions that is different from the first division region, the detecting unit 5 detects an abnormality in the information processing. Examples of the detecting unit 5 include an OS 31 and a memory error detecting unit 17.

When an abnormality is detected, the controlling unit 6 puts the second division region in the stand-by state and causes the first division region, which has been in the stand-by state, to recover. An example of the controlling unit 6 is the firmware 13.

After the reactivation, when information processing is performed using the first division region, which has recovered, the analyzing unit 7 adds the second division region that is in the stand-by state to a physical address space and performs a process of analyzing the information stored in the second division region. Examples of the analyzing unit 7 include the OS 31 and a CPU 12 that executes a crash investigation program.

Such a configuration allows memory information that has been protected in response to an occurrence of an abnormality to be easily analyzed without outputting the memory information to an external apparatus.

The information processing apparatus 1 further includes a mirroring controlling unit 8. When three or more division regions are present, the mirroring controlling unit 8 performs memory mirroring using a division region that is not in the stand-by state. An example of the mirroring controlling unit 8 is the firmware 13.

Such a configuration allows memory mirroring to be performed using a division region that is not in the stand-by state.

When an abnormality is detected, the controlling unit 6 puts any of the plurality of second division regions in the stand-by state and causes the first division region, which has been in the stand-by state, to recover. In this case, the mirroring controlling unit 8 performs memory mirroring using a second division region that is not in the stand-by state and the first division region, which has recovered.

Even while maintenance is being performed due to an occurrence of an abnormality in the information processing apparatus, such a configuration allows the information processing apparatus to be continuously stably operated while maintaining a memory mirroring state and holding memory-dump information.

When a detected abnormality is a memory error, the mirroring controlling unit 8 cancels mirroring. The controlling unit 6 puts in the stand-by state a second division region in which a memory error has not occurred from among the plurality of second division regions, and causes the first division region, which has been in the stand-by state, to recover.

Such a configuration allows the information processing apparatus to be continuously stably operated while cancelling memory mirroring.

The setting unit 4 separates the first division region from the physical address space. In this case, when an abnormality is detected, the controlling unit 6 separates the second division region from the physical address space and causes the first division region, which has been in the stand-by state, to return to the physical address space.

Such a configuration allows a stand-by memory to be formed and allows switching between a mirror memory and the stand-by memory.

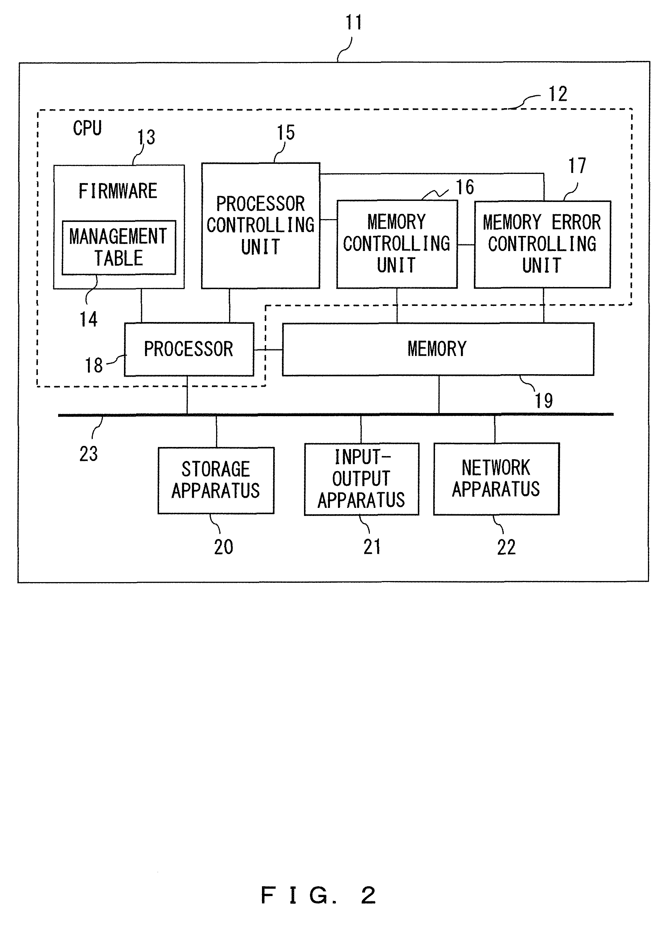

FIG. 2 illustrates a hardware block diagram of an information processing apparatus in accordance with the embodiment. An information processing apparatus 1 includes a central processing unit (CPU) 12, a memory device 19, a large-capacity storage apparatus 20, an input-output apparatus 21, a network apparatus 22, and a bus 23. The bus 23 connects the CPU 12, the memory device 19, the large-capacity storage apparatus 20, the input-output apparatus 21, and the network apparatus 22 to each other.

The memory device (hereinafter referred to as a "memory") 19 is a random access memory (RAM) from which information is readable and to which information is writable.

The large-capacity storage apparatus 20 is a storage apparatus that stores a large volume of data, such as a hard disk drive (HDD) or a flash memory drive (Solid State Drive (SSD)).

The input-output apparatus 21 is an apparatus by which data and a command are input or output. The input-output apparatus 21 is an input apparatus, such as a keyboard, a mouse, an electronic camera, a web camera, a microphone, a scanner, a sensor, a tablet, or a touch panel, or is an output apparatus, such as a display, a printer, or a speaker. The network apparatus 22 performs a communication by establishing a connection to a network, such as the internet or a local area network (LAN).

The CPU 12 includes firmware 13, a processor controlling unit 15, a memory controlling unit 16, a memory error detecting unit 17, and a processor 18.

The firmware 13 includes a program that controls hardware, such as a Basic Input/Output System (BIOS), a program that manages the management table 14, and a program that gives an instruction to each controlling unit within the CPU. The firmware 13 is stored in a storage region within the CPU 12. The management table 14 is stored in a storage region within the CPU 12. The management table 14 is used to perform management as to whether to use each of the divided memory regions of the memory 19 as a main memory or a stand-by memory and as to which memory region is to form memory mirroring. The memory mirroring herein means multiplexing memories and writing data to both of the multiplexed memories. Note that the terms "migration", "migrate", and "cause ··· to migrate" may be used instead of the terms "standby", "stand-by", and "punt ··· in a stand-by state".

The processor 18 includes a register and device information such as a system context. The processor controlling unit 15 controls the processor 18. The processor 18 performs a process according to a command from the processor controlling unit 15. According to an instruction from the firmware 13, the memory controlling unit 16 separates a memory region on the memory 19 from a physical address space or returns the memory region to the physical address space. The physical address space herein means an address on a main storage physically implemented in the computer and indicates an address range that can be accessed by designating an address bus. The memory error detecting unit 17 detects a memory error in the memory 19.

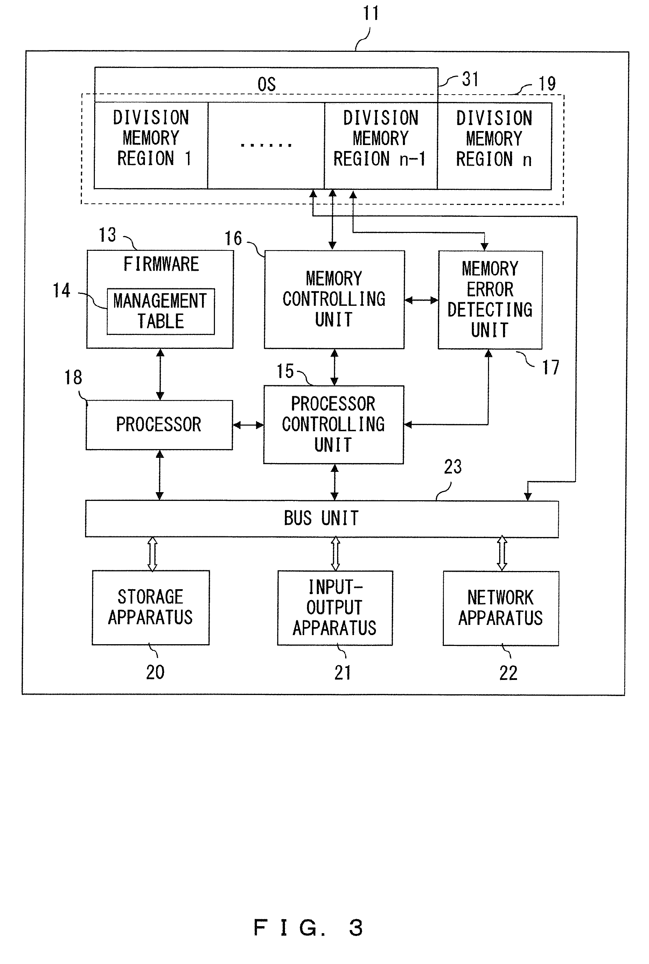

FIG. 3 illustrates an example of a multiplexing memory-mirroring system in accordance with the embodiment. First, the firmware 13 (BIOS) reads the management table 14, controls the memory controlling unit 16, and divides consecutive memory regions of the memory 19 into n regions. The divided memory regions will be referred to as memories 1, 2, ···, n. The memories 1, 2, ···, n are each defined by the firmware 13 as a target of memory mirroring. A memory that forms memory mirroring from among the divided memories will be referred to as a mirror memory. The firmware 13 sets at least one of the divided memories as a stand-by memory to which data cannot be written by the operating system (OS) 31 and another program.

With reference to example 1, descriptions will be given of switching between a mirror memory and a stand-by memory under a memory mirroring environment. Example 1 will be described with reference to an exemplary mirroring system that includes two mirror memories and one stand-by memory, but the mirroring system may include three or more mirror memories and two or more stand-by memories.

In the following, details of the embodiment will be described.

### (Example 1)

In an information processing apparatus that employs a multiplexing memory-mirroring system, even while maintenance is being performed due to an occurrence of an abnormality, it is preferable that a memory mirroring state be maintained and that the information processing apparatus be continuously stably operated. Accordingly, in example 1, in a multiplexed memory mirror system, a memory mirror is enabled after an abnormality occurs, and the memory information at the time of the abnormality is maintained. Consequently, when an abnormality occurs in the information processing apparatus, a job may be restarted in parallel with investigating the fault and collecting a dump.

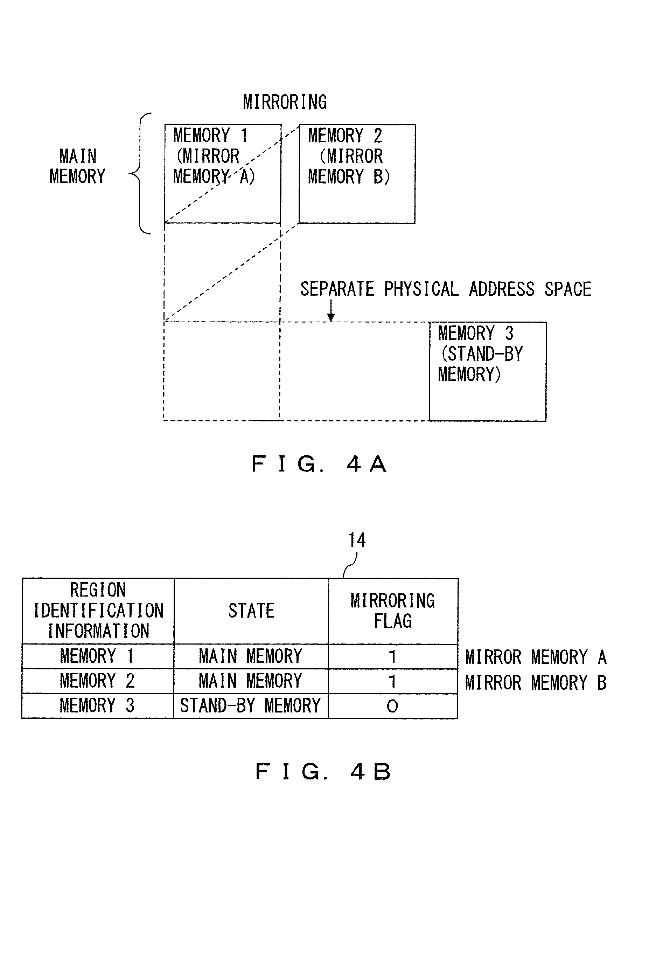

FIG. 4A illustrates states of a mirror memory and a stand-by memory before replacement in accordance with the embodiment (example 1). FIG. 4B illustrates a state of a management table for the situation of FIG. 4A. According to preset information, the BIOS divides consecutive memory regions of the memory 19 into three regions. The divided memory regions will be referred to as memories 1, 2, and 3.

Two of the three memories 1 to 3 may serve as main memories used for system operations, and, in addition, the two may serve as mirror memories to form memory mirroring.

The remaining one of the three memories 1 to 3 may serve as a stand-by memory reserved for switching. The stand-by memory is separated from the physical address space by the firmware 13. The management table 14 on the firmware 13 performs a management as to which memory is to serve as a main memory and as to which memory is to serve as a stand-by memory.

As illustrated in FIG. 4B, the management table 14 includes a "region identification information", a "state", and a "mirroring flag". The "region identification information" stores information that identifies each divided memory region. The "state" stores the information indicative of which of the state of a main memory, the state of a stand-by memory, and an error state the memory region is in. The "mirroring flag" stores flag information that determines a memory region with which memory mirroring is formed. For example, for a memory region with which memory mirroring is formed, a flag "1" is stored; for a memory region with which memory mirroring is not formed, a flag "0" is stored.

A memory region with "state"="main memory" and "mirroring flag"="1" will hereinafter be referred to as a mirror memory.

As illustrated in FIG. 4B, the management table 14 stores in advance, as default values, the information indicating memories 1 and 2 as main memories and a memory 3 as a stand-by memory. The memories 1 and 2 also serve as mirror memories A and B to form memory mirroring.

When the hardware is reset, the firmware 13 selects main memories (mirror memories A and B) and a stand-by memory from divided memories 1 to 3 in accordance with a setting of the management table 14. Then, the firmware 13 controls the memory controlling unit 16 so as to separate the stand-by memory from a physical address space.

The processor controlling unit 15 loads the OS 31 into the main memories so as to boot the OS 31. Resetting the hardware initializes the portions of the hardware other than the portion corresponding to the stand-by memory portion. In this case, a memory content stored in the stand-by memory is not cleared but is maintained.

As described above, two of the divided memories have memory mirroring applied thereto and are used as main memories. The other memory is defined as a stand-by memory and is thus separated from the physical address space.

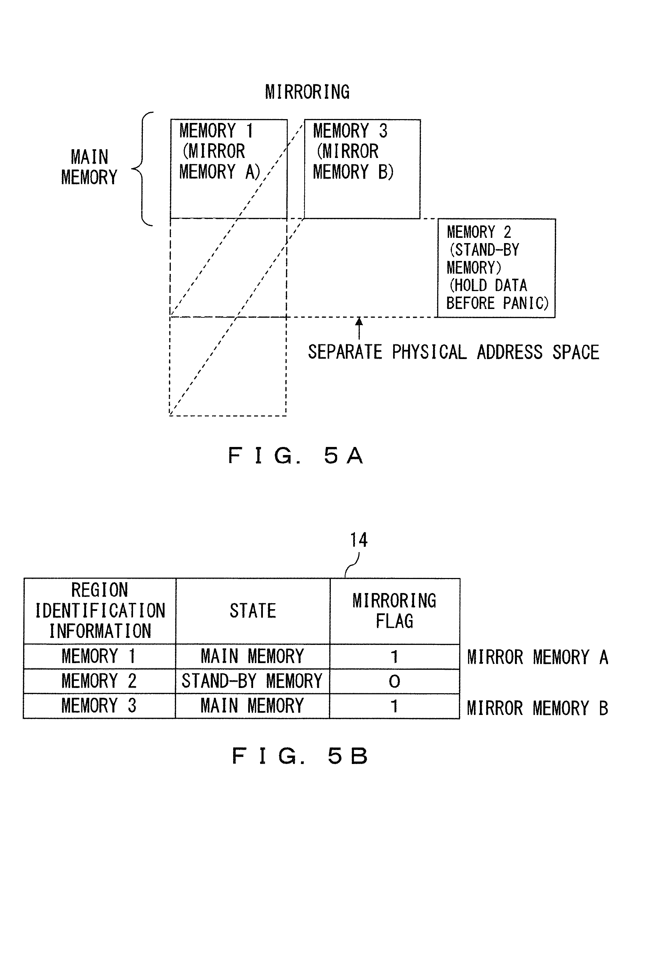

FIG. 5A illustrates states of a mirror memory and a stand-by memory in accordance with the embodiment (example 1) indicated when a panic watchdog timer (WDT) abnormality occurs. FIG. 5B illustrates a state of a management table for the situation of FIG. 5A. When the OS 31 detects an error such as a system panic or a WDT abnormality, the OS 31 performs a process of handling the error (e.g., resets the hardware).

Meanwhile, when the information processing apparatus 1 is reset, the firmware 13 registers, in the management table 14, the stand-by memory and one of the mirror memories as main memories and the other mirror memory as a new stand-by memory. The firmware 13 separates the new stand-by memory from the physical address space via the memory controlling unit 16. In comparison with FIG. 4B, FIG. 5B indicates the memories 1 and 3 set as the mirror memories A and B and the memory 2 set as a stand-by memory.

The processor controlling unit 15 initializes the two memories newly set as main memories and performs booting by loading the OS 31. In this case, the portions of the hardware other than the portion corresponding to the stand-by memory portion are initialized. Thus, the information within the stand-by memory (the memory 2) is held.

After the information processing apparatus 1 is restarted, the OS 31 and the other programs are executed on the main memory that has been newly set. To investigate a cause of an occurrence of a system panic or a WDT abnormality, the OS 31 uses an interface of the OS 31 so as to map a stand-by memory to a virtual address space provided for an arbitrary process. The virtual address space is a range virtually used by a program. The OS 31 executes a crash investigation program on a main memory and investigates the memory information held in the stand-by memory mapped to the virtual address space.

After the investigation is carried out, the OS 31 uses the interface (I/F) of the OS so as to cancel the mapping of the stand-by memory to the virtual space address, thereby separating the stand-by memory from the virtual address space. This allows a cause of an abnormality that has occurred in the information processing apparatus to be investigated without preparing a medium to collect a memory dump or another system to expand a memory dump. In addition, in the collecting of a memory dump, the load of a memory dump applied to the information processing apparatus may be determined by the maintenance person, and the information of a stand-by memory may be collected in a medium at a predetermined timing. Memory dumps are also operated on the main memory, thereby allowing a memory dump to be collected from a stand-by memory without rewiring a portion of the memory for the purpose of ensuring a reserve area.

When the memory error detecting unit 17 detects an occurrence of a memory error, the firmware 13 controls the memory controlling unit 16 so as to cancel mirroring and removes the memory on the mirror side where the memory error has occurred. For example, when an error occurs in the mirror memory A, the mirror memory A is removed, and the process is continued using the mirror memory B. Meanwhile, when an error occurs in the mirror memory B, the mirror memory B is removed, and the process is continued using the mirror memory A.

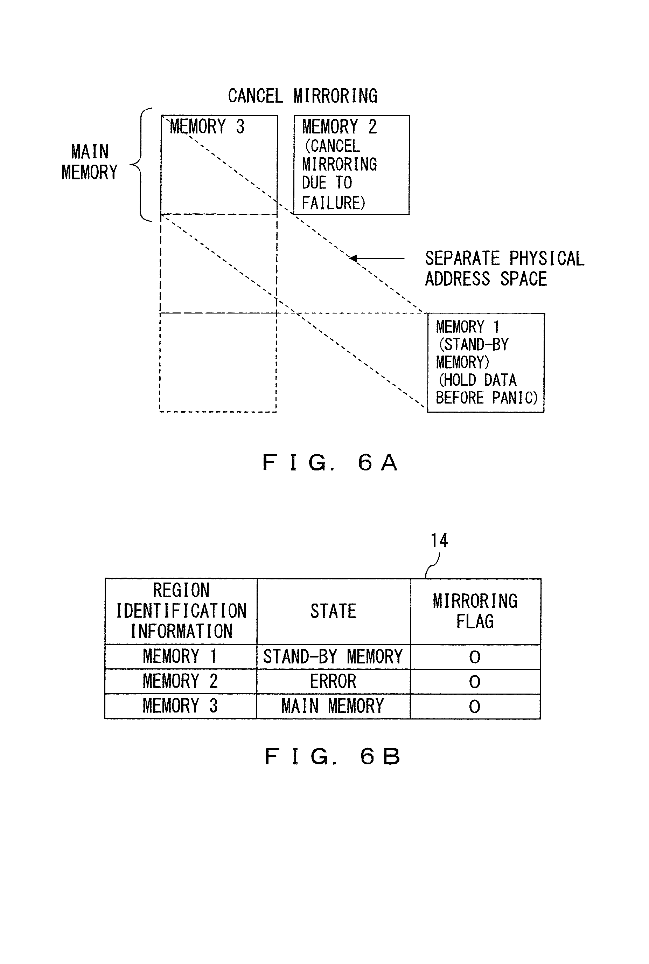

FIG. 6A illustrates states of a mirror memory and a stand-by memory in accordance with the embodiment (example 1) indicated when a panic watchdog timer (WDT) abnormality occurs during a memory error. FIG. 6B illustrates a state of a management table for the situation of FIG. 6A.

When a panic WDT abnormality occurs during a memory error, the firmware 13 restarts the OS 13 by replacing a stand-by memory with a mirror memory in which a memory error has not occurred and by replacing a main memory with the stand-by memory. In this case, mirroring is not applied to memories 1 and 3, and the memory on the mirror side where the memory error has occurred is removed from the main memory.

In the case of an occurrence of a system hang-up, the firmware 13 also replaces one of the mirror memories with a stand-by memory using the management table 14 at a moment when the hardware is reset by pressing a reset switch. Then, as in the aforementioned case of an occurrence of a panic WDT abnormality, the information processing apparatus 1, for which the memory has been replaced, is restarted. When one of the main memories fails, the firmware 13 also replaces the one memory that has failed with a stand-by memory using the management table 14. Then, as in the aforementioned case of an occurrence of a panic WDT abnormality, the information processing apparatus 1, for which the memory has been replaced, is restarted.

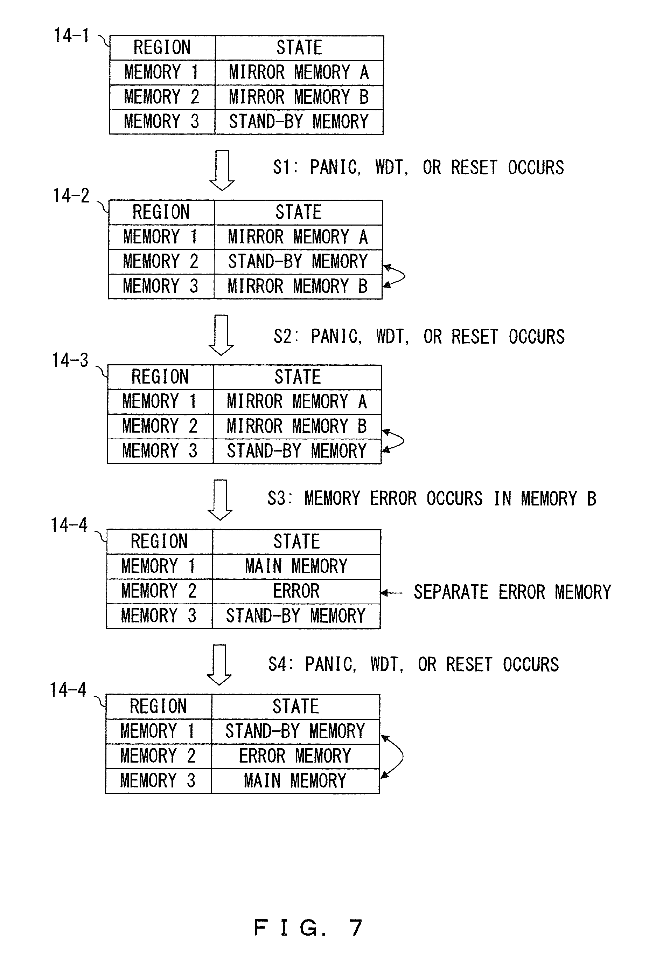

FIG. 7 illustrates a transition of a state of a memory region for an event that occurs in the embodiment (example 1). With reference to FIG. 7, descriptions will be given of the transition of the management table that is made in a situation wherein, first, a reset or an abnormality such as a panic occurs twice, then, a memory error occurs, and finally, a reset or an abnormality such as a panic occurs again. Assume that the management table 14 is initially in a state indicated by "14-1".

When a panic, a WDT, or a reset occurs (S1), the firmware 13 changes the state of the memory 2 from the mirror memory B to a stand-by memory and the state of the memory 3 from a stand-by memory to the mirror memory B (14-2). The firmware 13 applies mirroring to the memories 1 and 3 and boots the OS 31. The portions of the hardware other than the portion of the hardware corresponding to the stand-by memory portion are initialized. The memory 2 that has been changed and defined as a stand-by memory holds the memory information that had been written before the change was made.

When a panic, a WDT, or a reset occurs again (S2), the firmware 13 changes the state of the memory 2 from a stand-by memory to the mirror memory B and the state of the memory 3 from the mirror memory B to a stand-by memory (14-3). The firmware 13 applies mirroring to the memories 1 and 2 and boots the OS 31. The portions of the hardware other than the portion of the hardware corresponding to the stand-by memory portion are initialized. The memory 3 that has been changed and defined as a stand-by memory holds the memory information that had been written before the change was made.

When a memory error occurs in the memory 2 (S3), the firmware 13 cancels the mirroring of the memories 1 and 2 so as to separate the memory 2 from the physical address space (14-4).

When a panic, a WDT, or a reset occurs again (S4), the firmware 13 changes the state of the memory 1 from a main memory to a stand-by memory and the state of the memory 3 from a stand-by memory to a main memory. The firmware 13 boots the OS 31 using the memory 3. The portions of the hardware other than the portion of the hardware corresponding to the stand-by memory portion are initialized. The memory 1 that has been changed and defined as a stand-by memory holds the memory information that had been written before the change was made.

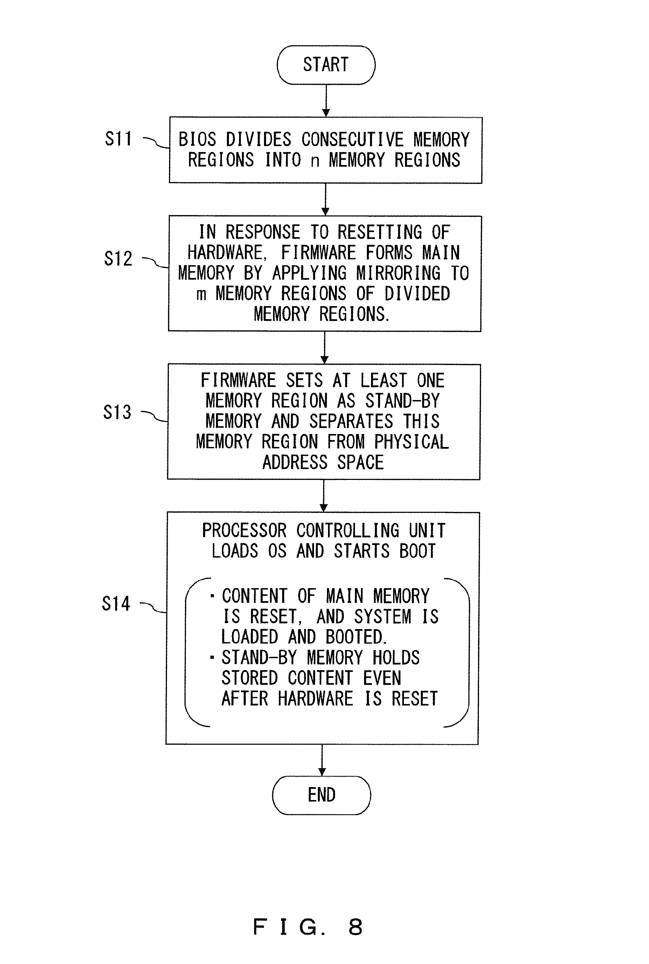

FIG. 8 illustrates a flow of a process of setting up memory mirroring and a stand-by memory in a boot process in the embodiment (example 1). According to a preset number of entries in the management table 14, the BIOS divides consecutive memory regions of the memory 19 into n memory regions (S11). Note that n is an integer that is three or greater. The divided memory regions are each defined as a target of memory mirroring, as will be described hereinafter.

In response to the resetting of the hardware, the firmware 13 applies mirroring to m of the divided memory regions so as to form a main memory (S12). Note that m is an integer that is two or greater. For example, the firmware 13 applies mirroring to two of the divided memory regions so as to form main memories (e.g., mirror memories A and B).

The firmware 13 sets, as a stand-by memory, at least one of the divided memory regions that does not form a main memory, registers this at least one memory region in the management table 14, and separates this at least one memory region from the physical address space via the memory controlling unit 16 (S13).

According to a content initially set in the management table 14, the firmware 13 determines which memory region is to be used for a main memory (e.g. , mirror memories A and B) and a stand-by memory.

Then, the processor controlling unit 15 loads the OS 31 and starts booting (S15). Simultaneously, the contents of the main memories (the mirror memories A and B) are reset, and the OS 31 is loaded and booted. The portions of the hardware other than the portion of the hardware corresponding to the stand-by memory portion are initialized. A stand-by memory holds a stored content even after the hardware is reset.

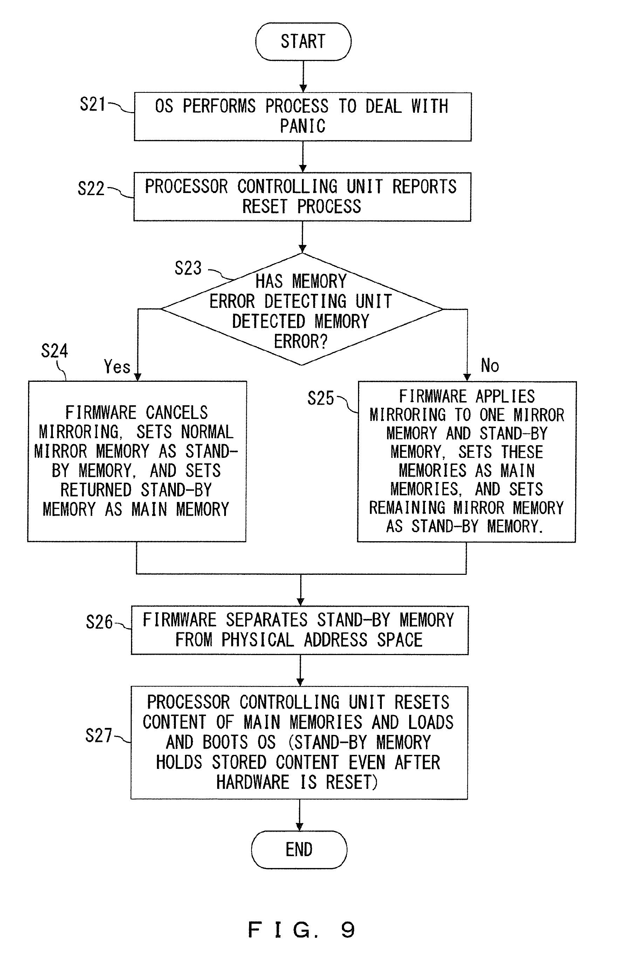

FIG. 9 illustrates a f low of a process of switching a stand-by memory when a panic WDT abnormality occurs in the embodiment (example 1). When a panic WDT abnormality occurs, the OS 31 performs a process to deal with the panic (S21). Then, the processor controlling unit 15 reports a reset process to the firmware 13 (S22).

In this case, when the memory error detecting unit 17 detects a memory error ("Yes" in S23), the firmware 13 performs the following process. The firmware 13 controls the memory controlling unit 16 so as to return a stand-by memory to a physical address space. The firmware 13 cancels mirroring via the memory controlling unit 16, sets, as a stand-by memory, a mirror memory in which a memory error has not been detected, and registers this memory in the management table 14. The firmware 13 also sets, as a main memory, the stand-by memory that has been returned to the physical address space and registers this memory in the management table 14 (S24).

When the memory error detecting unit 17 does not detect a memory error ("No" in S23), the two mirror memories that form the main memories are in a normal state, and hence the firmware 13 performs the following process. That is, the firmware 13 controls the memory controlling unit 16 so as to return the stand-by memory to the physical address space. Then, the firmware 13 applies mirroring to the stand-by memory returned to the physical address space and one of the mirror memories and sets these memories as main memories in the management table 14. The firmware 13 also sets the remaining mirror memories as stand-by memories in the management table 14 (S25).

The firmware 13 controls the memory controlling unit 16 so as to separate the newly set stand-by memories from the physical address space (S26).

The processor controlling unit 15 resets the content of the main memories and loads and boots the OS 31 (S27). The portions of the hardware other than the portion corresponding to the stand-by memory portion are initialized. The stand-by memories hold the stored content even after the hardware is reset.

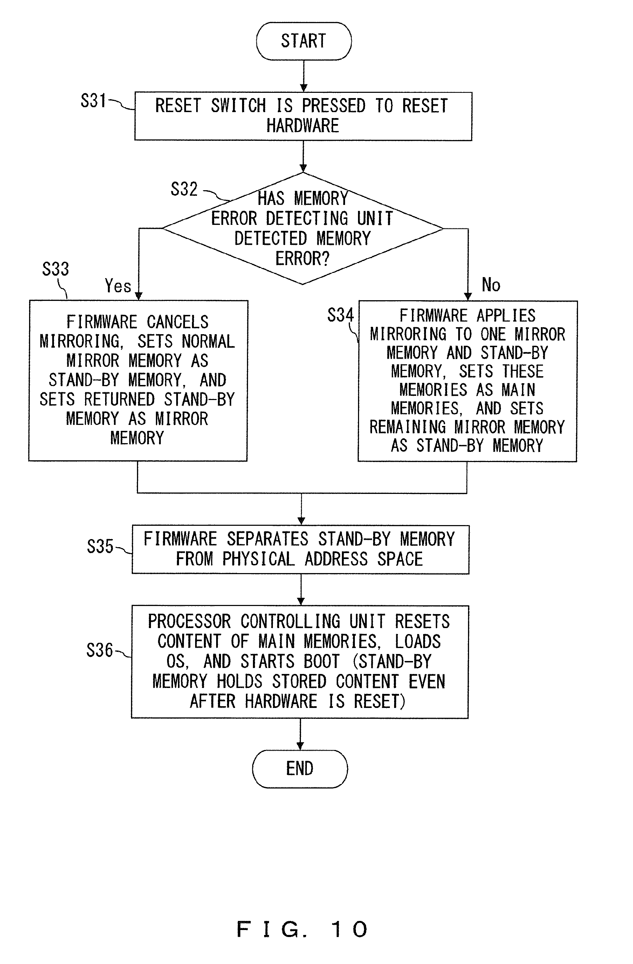

FIG. 10 illustrates a flow of a process of switching a stand-by memory when the system hangs up in the embodiment (example 1). With reference to the flow, descriptions will be given of a process of switching a stand-by memory when the information processing apparatus becomes unable to receive an instruction from outside due to an occurrence of an abnormality, i.e., when a system hang-up occurs. Pressing a reset switch to reset the hardware after a system hang-up occurs starts the following reboot process (S31).

When the memory error detecting unit 17 has detected a memory error ("Yes" in S32), the firmware 13 controls the memory controlling unit 16 so as to return a stand-by memory to the physical address space. The firmware 13 cancels mirroring via the memory controlling unit 16, sets, as a stand-by memory, a mirror memory in which a memory error has not been detected, and registers this memory in the management table 14. Meanwhile, the firmware 13 sets, as an error memory, a mirror memory in which a memory error has been detected, registers this memory in the management table 14, and separates this mirror memory from the physical address space via the memory controlling unit 16. The firmware 13 also sets, as a main memory, the stand-by memory that has been returned to the physical address space, and registers this memory in the management table 14 (S33).

When the memory error detecting unit 17 has not detected a memory error ("No" in S32), the two mirror memories that form the main memories are in a normal state, and hence the firmware 13 performs the following process. That is, the firmware 13 controls the memory controlling unit 16 so as to return the stand-by memory to the physical address space. Then, the firmware 13 applies mirroring to the stand-by memory returned to the physical address space and one of the mirror memories and sets these memories as main memories in the management table 14. The firmware 13 also sets the remaining mirror memories as stand-by memories in the management table 14 (S35).

The firmware 13 controls the memory controlling unit 16 so as to separate the newly set stand-by memories from the physical address space (S35).

The processor controlling unit 15 initializes the content of the main memories and loads and boots the OS 31 (S36). The portions of the hardware other than the portion corresponding to the stand-by memory portion are initialized. The stand-by memories hold the stored content even after the hardware is reset.

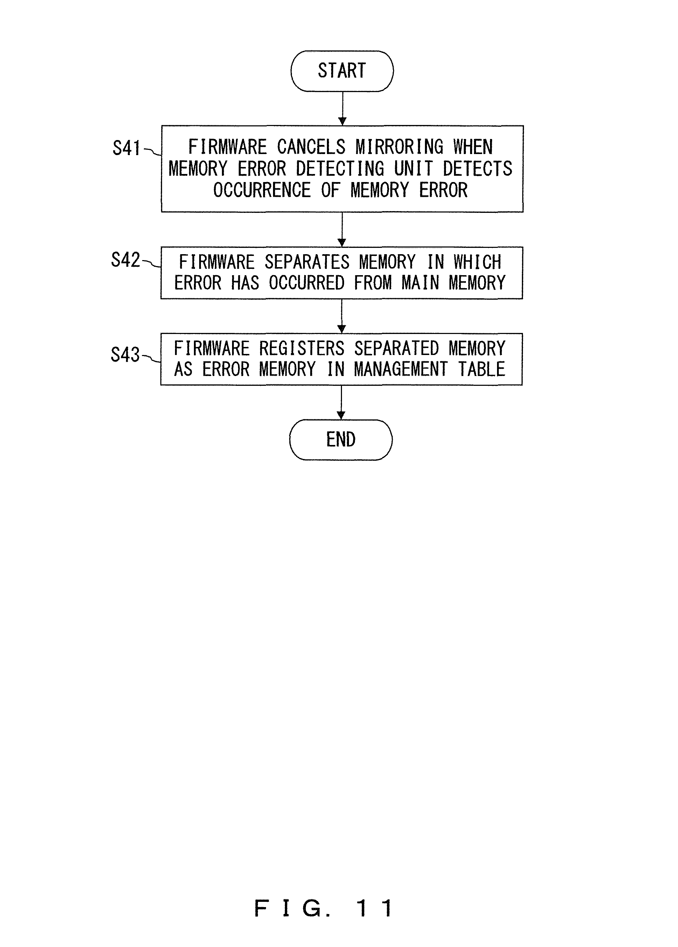

FIG. 11 illustrates a flow of a process of separating an error memory when a memory error occurs in the embodiment (example 1). When the memory error detecting unit 17 senses an occurrence of a memory error, the firmware 13 cancels the mirroring of the main memory via the memory controlling unit 16 (S41).

The firmware 13 separates from the main memory a memory in which an error has occurred via the memory controlling unit 16 (S42). The firmware 13 registers the separated memory as an error memory in the management table 14 (S43).

Then, the portion of the hardware corresponding to the separated memory region is replaced. In addition, the registration of the error memory is deleted from the management table 14 of the firmware. Consequently, the information processing apparatus is restored.

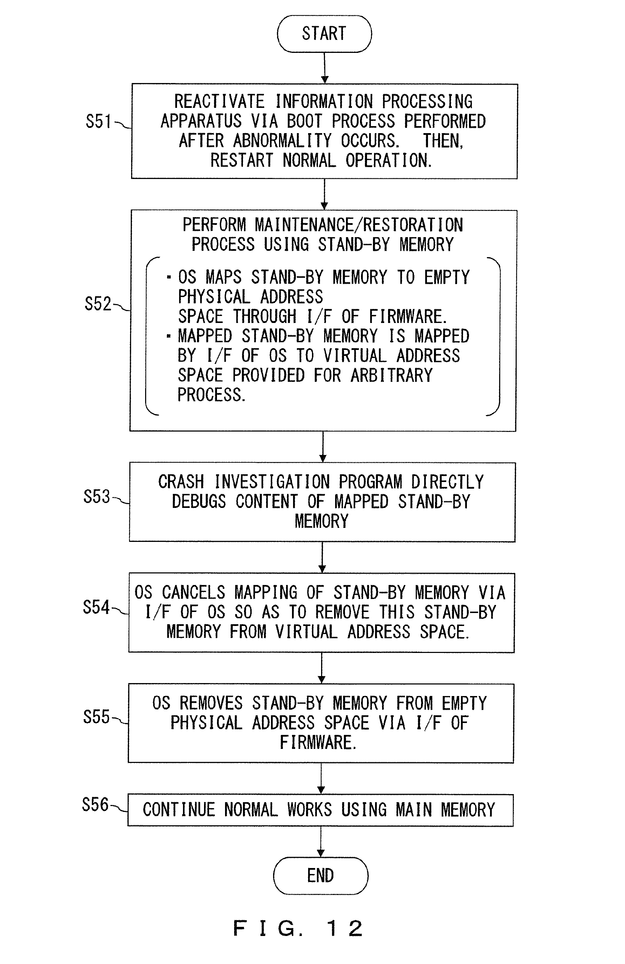

FIG. 12 illustrates a flow of a maintenance/restoration process in the embodiment (example 1). In a boot process performed after an abnormality occurs, the information processing apparatus 1 is restarted. Then, an operation of the information processing apparatus is restarted (S51).

Next, the maintenance/restoration process is performed using a stand-by memory (S52). The maintenance/restoration work may be performed without affecting normal operations of the information processing apparatus. In this example, through an interface (I/F) of the firmware, the OS 31 first maps the stand-by memory to an empty physical address space of the same physical address space as the physical address space in which the OS 31 is operated. The mapped stand-by memory is mapped by an I/F of the OS 31 to a virtual address space provided for an arbitrary process. This allows the OS 31 to read the content of the stand-by memory.

When the crash investigation program is activated on the OS 31 in accordance with a user instruction, the crash investigation program directly debugs the content of the mapped stand-by memory (S53). The OS 31 may save the content of the stand-by memory as a dump file when the load of a predetermined system is low.

The OS 31 cancels the mapping of the stand-by memory via the I/F of the OS 31 so as to remove the stand-by memory from the virtual address space (S54). The OS 31 removes the stand-by memory from the empty physical address space via the I/F of the firmware 13 (S55). Subsequently, the information processing apparatus 1 continues normal operations using the main memory (S56).

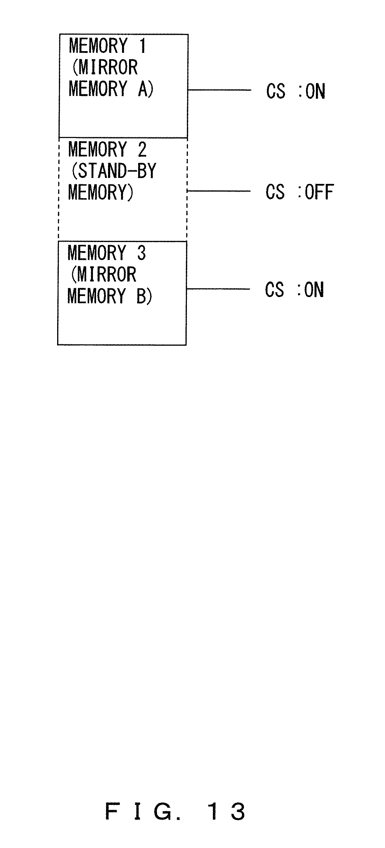

FIG. 13 illustrates a process of separating a memory region from a physical address space in the embodiment (example 1). The memory 19 includes Chip Select (CS) terminals each associated with a divided memory region. The CS terminals are used to make a choice as to whether or not to use a random access memory (RAM) element that forms each memory region.

The CS terminal is set within a range of a divided memory-region unit. The memory controlling unit 16 turns on or off each CS terminal according to an instruction from the firmware 13. Accordingly, for each divided memory region, control may be performed to separate the memory region from a physical address space and to return the memory region to the physical address space. For example, when a CS terminal is turned on, the memory region associated with the CS terminal is placed in the physical address space. When a CS terminal is turned off, the memory region associated with the CS terminal is separated from the physical address space. In addition, when a CS terminal is turned off, the memory controlling unit 16 does not initialize the memory region associated with the CS terminal in the initializing of the memory 19.

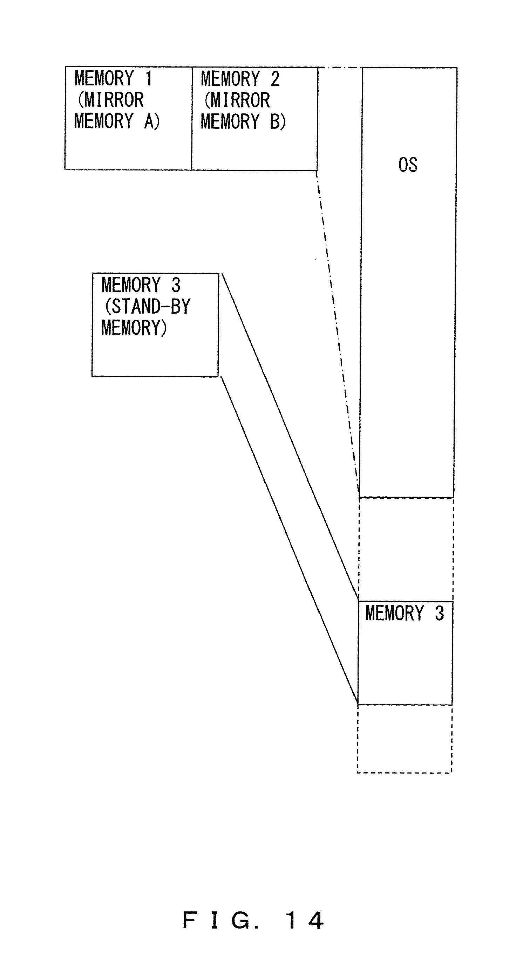

FIG. 14 illustrates mapping a stand-by memory to a virtual address space in the embodiment (example 1). In the example of FIG. 14, while the OS 31 is being operated with memories 1 and 2 to which mirroring has been applied, a stand-by memory 3 is mapped to an empty region of a virtual address space using a virtual address conversion function of the OS 31.

When the CS terminal associated with the memory 3 is turned on, the memory 3, i. e. , a stand-by memory that has been separated from a physical address space, returns to the physical address space. This makes the memory 3 accessible from the OS 31. In addition, mapping the memory 3 to a virtual address space allows a fault to be investigated without collecting a dump.

Alternatively, a stand-by memory region and an address region that serves as a main memory may be adjusted using an address decoder. For example, a physical address may be (or may not be) assigned to a memory region that is not address-decoded using the address decoder on the assumption that this memory region is a stand-by memory.

In accordance with example 1, after an abnormality occurs, a memory mirror may be enabled and the information processing apparatus may be restarted in parallel with investigating a memory image at the time of the abnormality or with collecting a dump. In addition, switching between mirror memories selected from a plurality of divided memory regions allows the holding of memory information and the restarting of the system to be simultaneously achieved, enabling a quick restart of the operation.

Meanwhile, mapping a stand-by memory holding memory information to a virtual address space allows the system in operation to carry out a crash investigation, thereby enabling the cause to be quickly investigated. Executing a dump on a system memory eliminates the rewriting of memory information to be dumped.

Enabling a dump to be collected at an arbitrary timing allows an adjustment to be made in a manner such that the load caused by the collecting of a dump does not affect an operation of the information processing apparatus. In addition, a crash investigation may be carried out without preparing another information processing apparatus, thereby simplifying the equipment and shortening the maintenance time.

Moreover, the firmware replaces a main memory and a stand-by memory in the restarting operation after the occurrence of an abnormality, so that the user can operate the information processing apparatus without considering a maintenance state. The memory configuration divided into a plurality of memories allows a restarting operation to be performed using one of the mirror memories of the main memory when an abnormality occurs in the other mirror memory of the main memory during an investigation.

### (Example 2)

With reference to example 2, descriptions will be given of a situation in which, when an abnormality occurs in memory mirroring with a two-side memory, one of the mirror memories is switched to a stand-by memory.

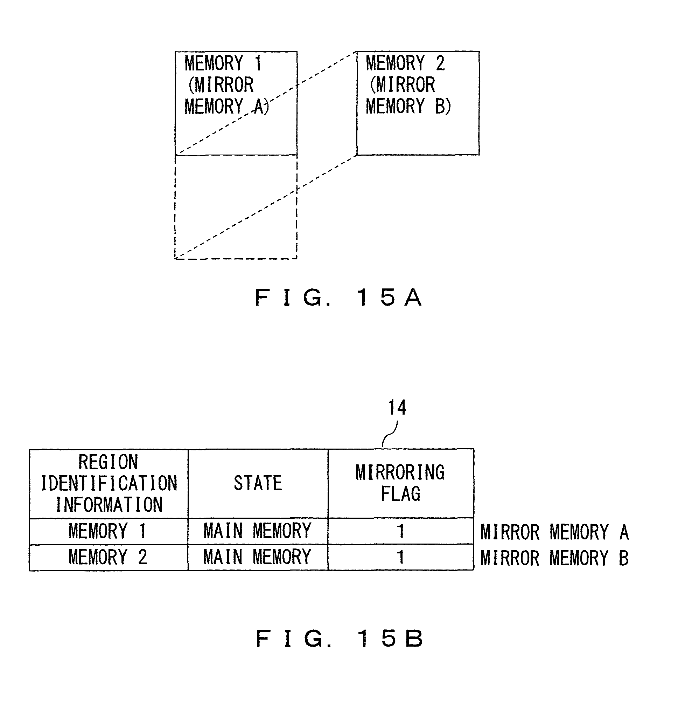

FIG. 15A illustrates a state of a memory indicated when a two-side memory mirroring system is normally operated in the embodiment (example 2). FIG. 15B illustrates a state of a management table for the situation of FIG. 15A.

As illustrated in FIG. 15A and FIG. 15B, while the information processing apparatus 1 is being normally operated, a stand-by memory is not present, two mirror memories are defined as main memories, and the information processing apparatus continues to be operated with memory mirroring performed using the two mirror memories.

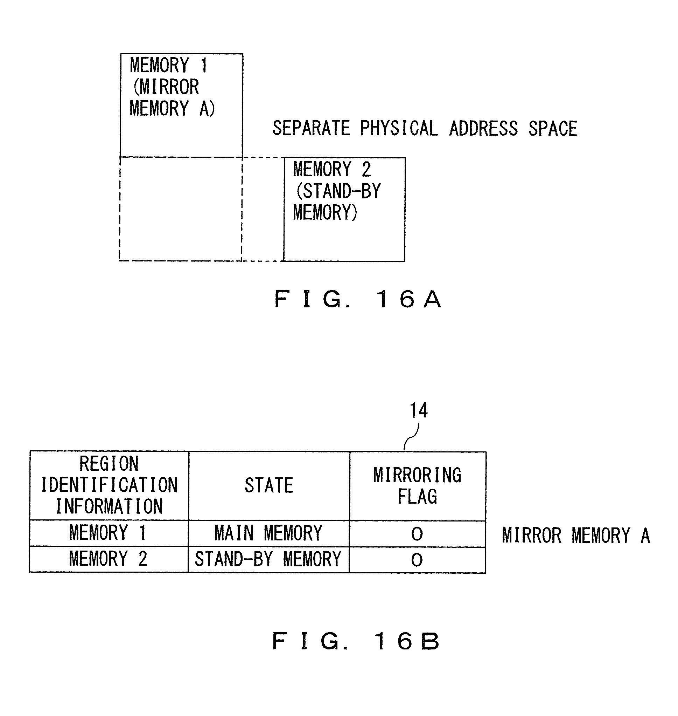

FIG. 16A illustrates a state of a memory indicated at the time of a panic, WDT, or resetting of a two-side mirroring system in the embodiment (example 2). FIG. 16B illustrates a state of a management table for the situation of FIG. 16A.

Assume that a panic, WDT has occurred in the system or the system has been reset without the OS 31 reporting a normal end to the firmware 31. In this case, the firmware 13 controls the memory controlling unit 16 so as to cancel memory mirroring, and one mirror memory shifts into a stand-by memory state and is thus separated from the physical address space. The portions of the hardware other than the portion corresponding to the stand-by memory portion are initialized. The content of the stand-by memory at the time of the occurrence of the abnormality is maintained.

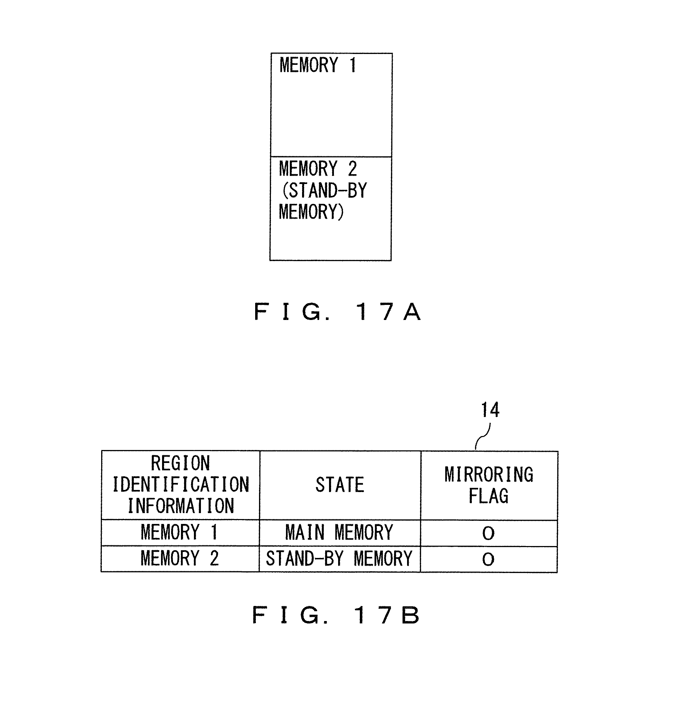

FIG. 17A illustrates a state of a memory indicated when a fault in a two-side mirroring system is investigated in the embodiment (example 2). FIG. 17B illustrates a state of a management table for the situation of FIG. 17A.

While the information processing apparatus 1 is in operation, the OS 31 instructs the firmware 13 to incorporate a stand-by memory into a physical address space. As described above with reference to FIG. 12, the stand-by memory incorporated in the physical address space is mapped to a virtual address space by the OS 31. This allows the OS 31 to read a content of the stand-by memory so that a fault can be investigated using the content of the stand-by memory when an abnormality occurs. After the investigation is completed, in accordance with a user instruction, the firmware 31 cancels the setting of the stand-by memory related to the memory 2 and uses again the memory 2 as a mirror memory for mirroring.

In example 2, after an abnormality occurs, the mirroring of memories is canceled to set one of the mirror memories as a stand-by memory, so that the holding of the content of the memory at the time of the occurrence of the abnormality and the restarting of the system can be achieved, enabling a quick restart of the operation. In addition, using the content of the stand-by memory, a memory image at the time of the abnormality may be investigated, or a dump may be collected.

Meanwhile, mapping a stand-by memory holding memory information to a virtual address space allows the system in operation to carry out a crash investigation, thereby enabling the cause to be quickly investigated. Executing a dump on a stand-by memory eliminates the rewriting of a memory to be dumped. Enabling a dump to be collected at an arbitrary timing allows an adjustment to be made in a manner such that the system load caused by the collecting of a dump does not affect a system operation. In addition, a crash investigation may be carried out without preparing another information processing apparatus, thereby simplifying the equipment and shortening the maintenance time.

In accordance with an aspect of the present invention, memory information that has been protected in response to an occurrence of an abnormality may be easily analyzed.

The present embodiment is not limited to the aforementioned embodiments, and various configurations or embodiments may be used without departing from the spirit of the present invention.

## Claims

1. An information processing apparatus (1) comprising:
a storage unit (2, 19) including a storage region in which information is stored;
a dividing unit (3, 13) configured to divide the storage region in accordance with storage region management information, the storage region management region including identification information that identifies the storage region of the storage unit and type information that indicates a type of the storage region;
a setting unit (4, 13) configured to select a first division region from division regions indicative of the divided storage region and to put the first division region in a stand-by state;
a detecting unit (5, 31, 17) configured to detect an abnormality in information processing when the information processing is performed using a second division region of the division regions that is different from the first division region;
a controlling unit (6, 13) configured to put, when the abnormality is detected, the second division region in the stand-by state and to cause the first division region, which has been in the stand-by state, to recover; and
an analyzing unit (7, 31, 12) configured to add the second division region that is in the stand-by state to a physical address space when the information processing subsequent to reactivation is performed using the first division region, which has recovered, and to perform a process of analyzing information stored in the second division region.

2. The information processing apparatus (1) according to claim 1, further comprising:
a mirroring controlling unit (8, 13) configured to perform, when three or more division regions are present, memory mirroring using the division region that is different from the division region that is in the stand-by state.

3. The information processing apparatus according to claim 2, wherein
when the abnormality is detected, the controlling unit (6, 13) puts any of the plurality of second division regions in the stand-by state and causes the first division region, which has been in the stand-by state, to recover, and
the mirroring controlling unit performs the memory mirroring using the second division region that is not in the stand-by state and the first division region, which has recovered.

4. The information processing apparatus according to claim 2, wherein
the mirroring controlling unit (8, 13) cancels the mirroring when the detected abnormality is a memory error,
the controlling unit (6, 13) puts, in the stand-by state, a second division region in which the memory error has not occurred from among the plurality of second division regions, and causes the first division region, which has been in the stand-by state, to recover.

5. The information processing apparatus according to any of claims 1 to 4, wherein
the setting unit (4, 13) separates the first division region from the physical address space,
when the abnormality is detected, the controlling unit (6, 13) separates the second division region from the physical address space and returns the first division region, which has been in the stand-by state, to the physical address space.

6. A stored information analyzing method comprising:
dividing, by an information processing apparatus (1), a storage region of a storage apparatus (2, 19) in accordance with storage region management information, the storage region management information including identification information that identifies the storage region and type information that indicates a type of the storage region (S11);
selecting, by the information processing apparatus (1), a first division region from division regions indicative of the divided storage region and putting, by the information processing apparatus (1), the first division region in a stand-by state (S13);
detecting, by the information processing apparatus (1), an abnormality in information processing when the information processing is performed using a second division region of the division regions that is different from the first division region (S23, S32);
when the abnormality is detected, putting, by the information processing apparatus (1), the second division region in the stand-by state and causing, by the information processing apparatus (1), the first division region, which has been in the stand-by state, to recover (S24 to S26; S33 to S35); and
adding, by the information processing apparatus (1), the second division region that is in the stand-by state to a physical address space when the information processing subsequent to reactivation is performed using the first division region, which has recovered, and analyzing, by the information processing apparatus (1), information stored in the second division region (S51 to S53).

7. The stored information analyzing method according to claim 6, the stored information analyzing method further comprising:
when three or more division regions are present, performing, by the information processing apparatus (1), memory mirroring using the division region that is different from the division region that is in the stand-by state (S12).

8. The stored information analyzing method according to claim 7, the stored information analyzing method further comprising:
when the abnormality is detected, putting, by the information processing apparatus (1), any of the plurality of second division regions in the stand-by state and causing, by the information processing apparatus (1), the first division region, which has been in the stand-by state, to recover (S25, S34); and
performing, by the information processing apparatus (1), the memory mirroring using the second division region that is not in the stand-by state and the first division region, which has recovered (S25, S34, S26).

9. The stored information analyzing method according to claim 7, the stored information analyzing method further comprising:
canceling, by the information processing apparatus (1), the mirroring when the detected abnormality is a memory error (S24, S33); and
putting in the stand-by state, by the information processing apparatus (1), a second division region in which the memory error has not occurred from among the plurality of second division regions, and causing, by the information processing apparatus (1), the first division region, which has been in the stand-by state, to recover (S24, S33, S26).

10. The stored information analyzing method according to any of claims 6 to 9, the stored information analyzing method further comprising:
separating, by the information processing apparatus (1), the first division region from the physical address space (S13); and
when the abnormality is detected, separating, by the information processing apparatus (1), the second division region from the physical address space and returning, by the information processing apparatus (1), the first division region, which has been in the stand-by state, to the physical address space (S24 to S26; S33 to S35).
